# EUROPEAN PATENT SPECIFICATION

(11) **EP 4 497 982 B1**
(45) Date of publication and mention of the grant of the patent: **14.01.2026**
(21) Application number: 24382545.2
(22) Date of filing: 23.05.2024
(51) Int. Cl.: F16L 3/10, G01N 29/22

(54) **METAL CLAMP WITH SUPPORT FOR THE EXTERNAL FIXATION OF MEASURING PROBES ON PIPES**
METALLSCHELLE MIT HALTERUNG ZUR AUSSENBEFESTIGUNG VON MESSSONDEN AUF ROHREN
COLLIER MÉTALLIQUE AVEC SUPPORT POUR LA FIXATION EXTERNE DE SONDES DE MESURE SUR DES TUYAUX

(30) Priority: 28.07.2023 ES 202330659
(43) Date of publication of application: 29.01.2025
(73) Proprietor: Grupo Mikalor S.L., 08203 Barcelona Sabadell (ES)
(72) Inventor: MONTANER GARCIA, JORGE, 08203 BARCELONA (ES)
(74) Representative: Espiell Gomez, Ignacio

(56) References cited:
- WO-A1-2008/067674
- CN-A- 103 062 506
- US-A1- 2007 040 075
- US-B2- 7 384 018

## Description

### OBJECT OF THE INVENTION

The invention, as stated in the title of the present specification, relates to a metal clamp with support for the external fixation of measuring probes on preferably metal pipes, which provides advantages and features to the function for which it is intended, which are described in detail later on and represent an improvement to the current state of the art due to the speed of assembly thereof, ease of installation, having no limit on the maximum diameter of application and low production cost compared to current systems.

The object of the present invention is a special metal clamp model with support specifically designed to facilitate the fixation of measuring probes on the outside of fluid pipes, preferably for large metal pipes, for example, in the field of oil refineries, without this being a limitation. The new clamp model has a novel configuration that represents an improvement over the systems currently known for the same purpose and that provides notable advantages, particularly in terms of ease of placement, adaptation to different tube types and sizes and in terms of effectiveness and safety in fastening.

### FIELD OF APPLICATION OF THE INVENTION

The field of application of the present invention falls within the sector of the industry dedicated to the manufacture of systems, apparatus, supports and devices for the fixation of probes or other similar measuring instruments, especially encompassing those intended for fixing said probes or instruments on the external surface of preferably metal fluid circulation pipes.

### BACKGROUND OF THE INVENTION

As is known, in the field of oil refineries and in other fields of the industry that involve the use of large pipe installations through which fluids circulate, in addition to measuring certain flow, temperature or pressure parameters of the fluid itself, it is very important to regularly monitor the condition of these pipes, since they may suffer from corrosion or other deterioration that reduces the thickness of the walls thereof and may pose a risk to the proper functioning of the installation. This is why probes or other measuring devices are usually installed on the outside of the pipes, which, on the other hand, can be large.

The problem is that for the probe to be able to correctly read the parameters it has to measure, it has to be well supported on the surface of the pipe and at the exact number of degrees to be able to measure correctly regardless of temperature fluctuations, something that is not always achieved. As such, vibrations and/or movements of the tube often exist due to changes in pressure and expansions and contractions of the material with which the pipes are made, since in many cases they are made of steel, and both the external environment and the fluids passing therethrough can undergo temperature changes that affect said material.

Thus, the probes must be placed horizontally, in other words, in parallel and in contact with the outer surface of the tube, which, on the other hand, is never flat but curved and must not move from this position, even if the tubes undergo expansion and/or vibrations, to be able to carry out probe measurements in real time and continuously.

To achieve this, the supports currently used are very large structures that require a complex installation, meaning that the probes cannot be located in any area of the tube to be measured, such as in the bends or curved areas, but normally they can only be located in the straight sections of the tube.

Furthermore, the installation and/or replacement or removal of the probe with the current supports also cannot be carried out quickly and simply, since it requires complete assembly and disassembly of the entire support. This represents a significant drawback since in an installation a large number of probes must be placed throughout the entire section of the pipes, and the flow of fluid circulation inside the pipe must be stopped in order to assemble or disassemble the support of the probe.

Lastly, another drawback of the current supports is that they are not modular, i.e., suitable for any tube section and/or diameter, but rather each support is specific for a single tube type and size.

Therefore, the objective of the present invention is the development of an improved type of support for probes that avoids said drawbacks, in other words, that allows the correct and safe fixation of the probe, so that it is perfectly in contact with the surface and does not move even if vibrations or expansions and contractions of the material occur. It is also easy to install and uninstall and substantially reduces the time required by operators to assemble same, and it is also adaptable to different tube shapes and sizes.

The applicant is aware of some patents related to the invention he seeks to protect. They are as follows:
Patent US2007/040075 discloses a metal clamp with support suitable for the external fixation of measuring probes on pipes. However, this metal clamp does not disclose any solution to ensure the parallel position of the probe to the surface of the pipe.
Patent CN103062506 discloses a pipe clamp reliable to fix, simple to assemble and disassemble, simple in processing technology, compact in structure and low in cost. However, this metal clamp does not disclose any solution to ensure the parallel position of the probe to the surface of the pipe.
Patent WO2008/067674 discloses a device and system for detecting corrosion. In particular, the invention relates to a device and system for detecting corrosion which produces hydrogen as a by-product, such as in pipes containing oil and gas and in pipes experiencing flow-accelerated corrosion.

Apart from those prior art documents, the applicant is unaware of the existence of any other support for the fixation of probes, or any other invention of similar application, which presents technical, structural and constitutive features that are the same or similar to those of that which is claimed herein.

### DESCRIPTION OF THE INVENTION

The metal clamp with support for the external fixation of measuring probes on pipes proposed by the invention is configured as an optimal solution to the aforementioned objectives which, in turn, represents an improvement to the current state of the art, where the characterising details that make it possible and that distinguish it are suitably included in the final claims that accompany this description.

Specifically, what the invention proposes, as previously noted, is a metal clamp with support specifically designed to facilitate the fixation of measuring probes or other instruments on the outside of fluid pipes, in particular large pipes, for example in the field of oil refineries, but without this being a limitation. Said clamp has the particularity of having a novel configuration that represents an improvement over the systems currently known for the same purpose, providing important advantages, particularly in terms of ease of placement, speed of installation, adaptation to different tube types and sizes, improved effectiveness of the installed probe, ensured fastening and cost reduction.

More specifically, the metal clamp with support for the external fixation of measuring probes object of the present invention essentially comprises an annular part, preferably flat, in which central hole the probe is fixed by means of, for example, threaded studs provided for this purpose, and which also rests on the surface of the pipe, by means of metal cinching belts, made up of at least two segments and joined by tightening means, which allows it to hug around the pipe on which the probe is to be installed, allowing its perfect fixation and adaptation to the shape and dimensions thereof.

Thus, one of the advantages of the support is that the support of the probe can be adjusted on the surface of the pipe to ensure contact therewith, improving the effectiveness of the probe. Furthermore, the clamp with support is tightened with the cinching belt but on the opposite side of the annular support of the probe.

Preferably, the flat annular part where the probe is fixed has at least two threaded studs to fix it to the support base of the probe, where respective through holes have been provided for this purpose, and with four independent contact screws that provide four support points and allow the positioning of the probe to be balanced on the curved surface of the pipe, improving the effectiveness of the probe.

On the other hand, the metal cinching belt, if necessary, may comprise several additional segments, extending its length and thus being able to cover any pipe diameter no matter how large it may be. In this case, each segment is joined with additional metal tightening belts, which allows the assembly to be tightened in a compensated manner around the entire perimeter of the pipe. In other words, in such case, the metal cinching belt around the pipe to adjust to the same will be tightened by gradually tightening each of the different tightening means slightly until they all apply a similar pressure.

Preferably, the tightening means for tightening the metal cinching belt of the support comprise a closing screw with special washers that absorbs expansion, and therefore, if there is expansion or contractions in the tube, the clamp will continue to function normally.

Preferably, said closing screw of the cinching strip is of the type that is threaded on a swivel bushing, in order to modify the angle thereof with respect to the body of the cinching strip and acts in the same way regardless of the number of segments that said strip comprises, since, as expected, the angle of the position of the closing screw will vary depending on the diameter of the pipe and, therefore, on the number of segments that the metal cinching belt comprises.

Given the foregoing, the metal clamp with support for the external fixation of measuring probes of the present invention advantageously allows the probe to be removed and repositioned, for its replacement or whatever it may be, without having to disassemble the cinching strip.

Preferably, the probe for which the support object of the invention is intended is of the type that measures the actual thickness of the tube, the internal temperatures, the frequency or the pressures, among other data, and therefore all this information makes it possible to make decisions about maintenance and production stops at the most appropriate time, in addition to avoiding possible accidents.

Other important advantages provided by the support object of the present invention are:
- Speed of assembly. It is only necessary to place the metal cinching belt and screw in the closing screw, and then assemble the probe on the annular part. Then, it is only necessary to tighten the tightening screws of the annular part to balance the support of the probe on the surface of the pipe.
- Reliability. Given the constant pressure of the metal clamp, through the partial cinching belts and with the screws of the annular base, there is a constant pressure / fixation of the probe with the surface of the tube, while at the same time improving the reliability of the data collected by the probe.
- Safety. The design of the washers on the screws, together with the design of the cinching belt, allows the expansion or contraction of the tube, normally due to temperature changes of the fluid that runs through the inside of the tube, to be absorbed.
- Costs. The design of the entire assembly. Belt band, screws, washers, annular support and different fixings, which allow the total manufacturing cost of the product to be much more affordable than the other current solutions.
- The annular support is an essential element for adjusting the probe with the perfect inclination so that it functions correctly.
- The metal clamp with support can even be installed on tube bends or curved pipe sections, since the cinching strip has a very small width that facilitates this possibility.

### DESCRIPTION OF THE DRAWINGS

To complete the description provided herein, and for the purpose of helping to make the features of the invention more readily understandable, this description is accompanied by a set of drawings constituting an integral part of the same, which by way of illustration and not limitation represents the following:
Figure 1 shows a schematic side elevation view of an exemplary embodiment of the support for external fixation of measuring probes on pipes object of the invention, which has been represented without including the probe and without incorporating it onto the pipe, showing the general configuration and main parts thereof;
Figure 2 shows a schematic front elevation view of the example of the support of the invention shown in figure 1;
Figures 3, 4 and 5 show respective schematic top plan, side elevation and front elevation views of the annular part comprising the support for the fixation of the probe, showing the configuration and parts thereof;
Figure 6 shows a schematic perspective view of the annular part of the support of the invention, in this case represented with the rest of the elements of the annular support but without including the probe;
Figure 7 shows a schematic elevation view of the example of the support of the invention shown in the preceding figures, in this case represented with the probe incorporated and once coupled to the pipe;
Figure 8 shows a schematic sectional view of the annular support with the probe coupled to the pipe;
Figure 9 shows a schematic side elevation view of another example of the support of the invention, in this case an example with a multitude of metal cinching belt segments that allows it to adapt to any type of diameter of metal pipes.
Figures 10 and 11 show applied side elevation and plan views of the tightening means comprised by the metal cinching belt to adjust to the pipe.

### PREFERRED EMBODIMENT OF THE INVENTION

In view of the aforementioned figures, and in accordance with the adopted numbering, one may observe therein non-limiting exemplary embodiments of the support for external fixation of measuring probes on pipes of the invention, comprising what is described in detail below.

Thus, as shown in said figures, the metal clamp (1) with support for the external fixation of measuring probes of the invention, applicable for the fixation of at least one probe (2) on the external surface of a pipe (3), essentially comprises at least one annular part (4), in which central hole (40) the probe (2) is fixed by means of screwing studs (41), and a metal cinching belt (5), which is made up of at least two segments (50) joined at one end to the annular part (4), joined together at the opposite end by means of special tightening means (6) surrounding the pipe (3) on which the probe (2) is installed.

Preferably, the annular part (4) further comprises contact screws (42) that define respective support points on the surface of the pipe (3) and that have independent tightening to ensure the perfect parallel position of the probe (2) to said surface of the pipe (3).

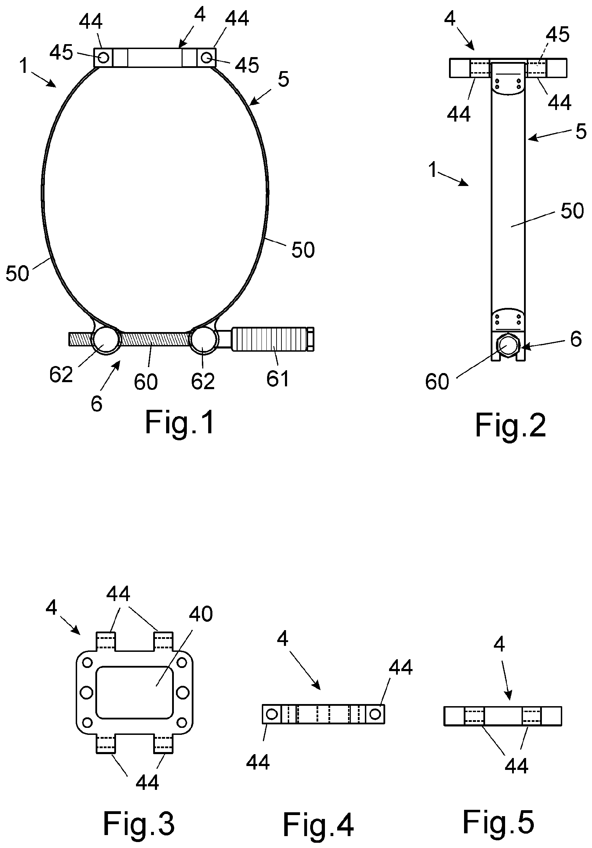

As shown in figures 3 to 6, preferably, the annular part (4) has a quadrangular frame configuration and comprises at least two threaded studs (41) located in holes provided on opposite sides with respective nuts (43) to fix it to a support base (20) of the probe (2), where in turn respective through holes have been provided for this purpose, and four contact screws (42), inserted into provided holes, one in each corner of said frame which, equipped with corresponding tightening nuts (43), can be threaded independently to balance the positioning of the probe (2) on the curved surface of the pipe (3).

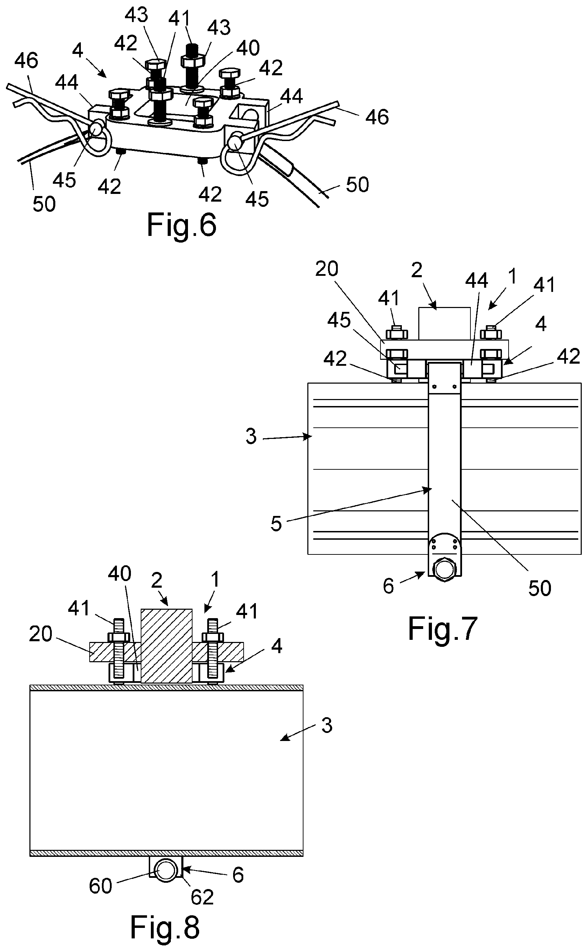

Furthermore, preferably, the annular part (4) comprises perforated protrusions (44) in which respective pins (45) are contemplated for fixing the ends of each of the segments (50) comprised by the metal cinching belt (5), as shown in figure 6. Preferably, said pins (45) are secured by a fastening clip (46).

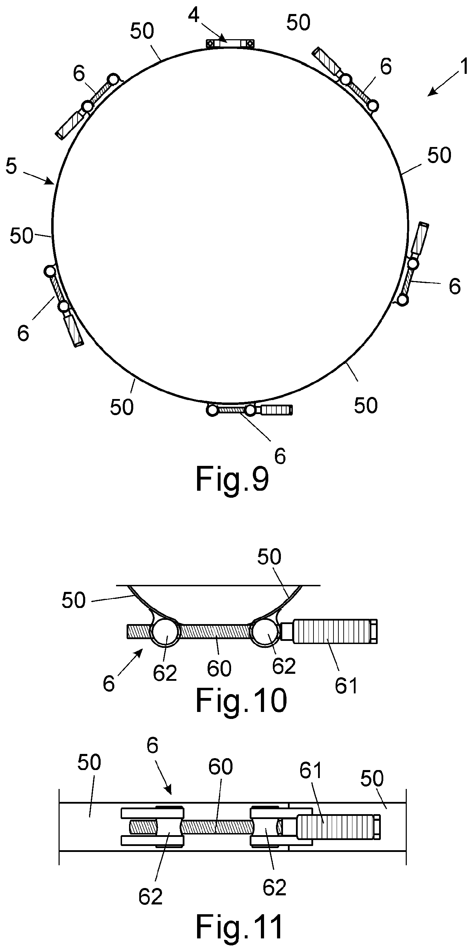

Furthermore, figure 9 shows how, in one embodiment option, the metal cinching belt (5) may comprise several additional segments (50) to extend its length and adapt to any diameter of pipes (3), in which case each segment (50) is joined with additional tightening means (6).

Figures 10 and 11 show how, preferably, said tightening means (6) of the support comprise a closing screw (60) attached to washers that act as springs (61) to absorb expansions due to temperature variations.

Furthermore, preferably, the closing screw (60) of the tightening means (6) of the metal cinching belt (5) threads on at least one swivel bushing (62), preferably on two swivel bushings (62), in other words, they are joined in a swivelling manner to the ends of the segments (50) of the metal cinching belt (5), allowing the positioning angle of the screw (60) to be modified with respect to the body of the metal cinching belt (5) and in this way adapt to different curvatures of the surface of the pipe (3) depending on the diameter or dimension thereof, in addition to facilitating the increase in the tightening torque of the screw, which consequently increases the pressure on the fixation of the clamp or assembly.

Preferably, the annular part (4) is a metal part and, preferably, the metal cinching belt (5) is made up of metal strip segments (50).

Given the foregoing, to fix the assembly to the pipe, first the metal clamp and support to the pipe is surrounded and the screws (60) are tightened by the tightening means to join/fix all the ends of the metal cinching belt (5) to the tube and leave the clamp perfectly adjusted. Next, the probe (2) is fixed to the annular part (4) by fixing the studs (41) to the base (20) of the probe (2). Lastly, the contact screws (42) are tightened so that the probe (2) is perfectly positioned on the surface of the pipe (3).

Furthermore, when the metal cinching belt (5) comprises several segments (50) with more than one tightening means (6), said means are gradually threaded to balance the applied pressure.

Having sufficiently described the nature of the present invention, as well as the ways in which it may be implemented, it is not considered necessary to elaborate on the explanation thereof in order for a person skilled in the art to understand the invention and the advantages derived therefrom.

## Claims

1. A metal clamp with support for the external fixation of measuring probes on pipes being applicable for the fixation of at least one probe (2) on the external surface of a pipe (3), which comprises,
• at least one annular part (4), in which central hole (40) the probe (2) is fixed,
• a metal cinching belt (5), which is made up of at least two segments (50) joined at one end to the annular part (4), joined together at the opposite end by means of tightening means (6) surrounding the pipe (3) on which the probe (2) is to be installed
**characterised in that** the annular part (4) further comprises contact screws (42) that define respective support points on the surface of the pipe (3) and that have independent tightening to ensure the parallel position of the probe (2) to said surface of the pipe (3).

2. The metal clamp with support for the external fixation of measuring probes on pipes, according to claim 1, **characterised in that** the annular part (4) has a quadrangular frame configuration and comprises at least two threaded studs (41) located on opposite sides with respective nuts (43) to fix it to a support base (20) of the probe (2), where respective through holes have been provided for this purpose, and four contact screws (42), one in each corner of said frame which, equipped with corresponding tightening nuts (43), can be threaded independently to balance the positioning of the probe (2) on the curved surface of the pipe (3).

3. The metal clamp with support for the external fixation of measuring probes on pipes, according to any of the preceding claims, **characterised in that** the annular part (4) comprises perforated protrusions (44) in which respective pins (45) are contemplated for fixing the ends of each of the segments (50) comprised by the metal cinching belt (5).

4. The metal clamp with support for the external fixation of measuring probes on pipes, according to any of the preceding claims, **characterised in that** the metal cinching belt (5) comprises several additional segments (50) to extend its length and adapt to pipes (3) of any diameter, and **in that** each segment (50) is joined with additional tightening means (6).

5. The metal clamp with support for the external fixation of measuring probes on pipes, according to any of the preceding claims, **characterised in that** the tightening means (6) comprise a closing screw (60) attached to a set of washers that act as a spring (61) or another flexible element that absorbs expansions due to temperature changes.

6. The metal clamp with support for the external fixation of measuring probes on pipes, according to claim 5, **characterised in that** the closing screw (60) threads on at least one swivel bushing (62), allowing the positioning angle of the screw (60) to be modified with respect to the body of the metal cinching belt (5) and adapt to different curvatures of the surface of the pipe (3).

## Patentansprüche

1. Metallschelle mit Halterung zur Außenbefestigung von Messsonden an Rohren, die zur Befestigung von mindestens einer Sonde (2) an der Außenfläche eines Rohres (3) geeignet ist, umfassend,
• mindestens ein ringförmiges Teil (4), in dem die Sonde (2) in einer zentralem Öffnung (40) befestigt ist,
• einen metallischen Spanngurt (5), der aus mindestens zwei Segmenten (50) besteht, die an einem Ende mit dem ringförmigen Teil (4) und am gegenüberliegenden Ende mittels einem Spannmittel (6), das das Rohr (3), an dem die Sonde (2) installiert werden soll, umgibt, miteinander verbunden sind
**dadurch gekennzeichnet, dass** der ringförmige Teil (4) ferner Kontaktschrauben (42) umfasst, die entsprechende Stützpunkte auf der Oberfläche des Rohrs (3) definieren und die unabhängig voneinander angezogen werden, um die parallele Position der Sonde (2) zu der Oberfläche des Rohrs (3) zu gewährleisten.

2. Metallschelle mit Halterung zur Außenbefestigung von Messsonden an Rohren gemäß Anspruch 1, **dadurch gekennzeichnet, dass** der ringförmige Teil (4) eine viereckige Rahmenkonfiguration aufweist und mindestens zwei gegenüberliegende Gewindebolzen (41) mit jeweils zugehörigen Muttern (43) zur Befestigung an einer Trägerbasis (20) der Sonde (2) umfasst, wo zu diesem Zweck entsprechende Durchgangsöffnungen vorgesehen sind, und vier Kontaktschrauben (42), jeweils eine in jeder Ecke des Rahmens, die mit entsprechenden Spannmuttern (43) ausgestattet sind und unabhängig voneinander angezogen werden können, um die Positionierung der Sonde (2) auf der gekrümmten Oberfläche des Rohrs (3) auszugleichen.

3. Metallschelle mit Halterung zur Außenbefestigung von Messsonden an Rohren gemäß einem der vorstehenden Ansprüche, **dadurch gekennzeichnet, dass** der ringförmige Teil (4) perforierte Vorsprünge (44) aufweist, in denen jeweils Stifte (45) zur Befestigung der Enden jedes der Segmente (50) des metallischen Spanngurts (5) vorgesehen sind.

4. Metallschelle mit Halterung zur Außenbefestigung von Messsonden an Rohren nach einem der vorhergehenden Ansprüche, **dadurch gekennzeichnet, dass** der metallische Spanngurt (5) mehrere zusätzliche Segmente (50) aufweist, um seine Länge zu verlängern und sich an Rohre (3) beliebigen Durchmessers anzupassen, und dass jedes Segment (50) mit zusätzlichen Spannmitteln (6) verbunden ist.

5. Metallschelle mit Halterung zur Außenbefestigung von Messsonden an Rohren nach einem der vorhergehenden Ansprüche, **dadurch gekennzeichnet, dass** die Spannmittel (6) eine Verschlussschraube (60) umfassen, die an einem Satz von Unterlegscheiben befestigt ist, die als Feder (61) oder ein anderes flexibles Element wirken, das Ausdehnungen aufgrund von Temperaturänderungen ausgleicht.

6. Metallschelle mit Halterung zur Außenbefestigung von Messsonden an Rohren gemäß Anspruch 5, **dadurch gekennzeichnet, dass** die Verschlussschraube (60) auf mindestens eine Schwenkbuchse (62) aufgeschraubt ist, wodurch der Positionierungswinkel der Schraube (60) in Bezug auf den Körper des metallischen Spanngurts (5) verändert und an unterschiedliche Krümmungen der Oberfläche des Rohres (3) angepasst werden kann.

## Revendications

1. Collier métallique avec support pour la fixation externe de sondes de mesure sur des tuyaux, étant applicable à la fixation d'au moins une sonde (2) sur la surface externe d'un tuyau (3), qui comprend,
• au moins une partie annulaire (4), dans laquelle le trou central (40) de la sonde (2) est fixé,
• une ceinture de compression métallique (5), qui est constituée d'au moins deux segments (50) joints au niveau d'une extrémité à la partie annulaire (4), joints ensemble au niveau de l'extrémité opposée au moyen de moyens de serrage (6) entourant le tuyau (3) sur lequel la sonde (2) doit être installée
**caractérisé en ce que** la partie annulaire (4) comprend en outre des vis de contact (42) qui définissent des points de support respectifs sur la surface du tuyau (3) et qui ont un serrage indépendant pour assurer la position parallèle de la sonde (2) à ladite surface du tuyau (3).

2. Collier métallique avec support pour la fixation externe de sondes de mesure sur des tuyaux, selon la revendication 1, **caractérisé en ce que** la partie annulaire (4) a une configuration de cadre quadrangulaire et comprend au moins deux goujons filetés (41) situés sur des côtés opposés avec des écrous (43) respectifs pour la fixer à une base de support (20) de la sonde (2), où des trous traversants respectifs ont été prévus à cet effet, et quatre vis de contact (42), une dans chaque coin dudit cadre qui, équipées d'écrous de serrage (43) correspondants, peuvent être filetées indépendamment pour équilibrer le positionnement de la sonde (2) sur la surface courbe du tuyau (3).

3. Collier métallique avec support pour la fixation externe de sondes de mesure sur des tuyaux, selon l'une quelconque des revendications précédentes, **caractérisé en ce que** la partie annulaire (4) comprend des protubérances perforées (44) dans lesquelles des goupilles (45) respectives sont envisagées pour fixer les extrémités de chacun des segments (50) compris par la courroie de compression métallique (5).

4. Collier métallique avec support pour la fixation externe de sondes de mesure sur des tuyaux, selon l'une quelconque des revendications précédentes, **caractérisé en ce que** la courroie de compression métallique (5) comprend plusieurs segments (50) supplémentaires pour étendre sa longueur et s'adapter aux tuyaux (3) d'un quelconque diamètre, et **en ce que** chaque segment (50) est joint avec des moyens de serrage (6) supplémentaires.

5. Collier métallique avec support pour la fixation externe de sondes de mesure sur des tuyaux, selon l'une quelconque des revendications précédentes, **caractérisé en ce que** les moyens de serrage (6) comprennent une vis de fermeture (60) assujettie à un ensemble de rondelles qui agissent comme un ressort (61) ou un autre élément flexible qui absorbe les extensions dues aux changements de température.

6. Collier métallique avec support pour la fixation externe de sondes de mesure sur des tuyaux, selon la revendication 5, **caractérisé en ce que** la vis de fermeture (60) vient par filetage sur au moins une douille pivotante (62), permettant de modifier l'angle de positionnement de la vis (60) par rapport au corps de la ceinture de compression métallique (5) et de l'adapter à différentes courbures de la surface du tuyau (3).
